# EUROPEAN PATENT APPLICATION

(11) **EP 2 559 728 A1**
(43) Date of publication of application: **20.02.2013**
(21) Application number: 11768689.9
(22) Date of filing: 10.03.2011
(51) Int. Cl.: C08L 23/08, C08K 5/101, C08K 5/5419, C08L 83/05, C09K 3/10, F16J 15/10, H01M 8/02

(54) **RUBBER COMPOSITION AND USE THEREOF**

(30) Priority: 12.04.2010 JP 2010091707
(71) Applicant: Nok Corporation, Tokyo 105-0012 (JP)
(72) Inventor: HASEGAWA Tomonori, Fujisawa-shi Kanagawa 251-0042 (JP)
(74) Representative: Epping - Hermann - Fischer
(86) International application number: PCT/JP2011/055667
(87) International publication number: WO 2011/129168

(57) **Abstract**

Provided is a rubber composition, which has excellent heat resistance, acid resistance, gas permeability resistance, and high-speed moldability, has low hardness and low counterforce, has excellent high-temperature compression set, and does not adhere to the metal of molds, etc. but is self-adhering with respect to organic resins. The rubber composition comprises: a predetermined ethylene/α-olefin/non-conjugated polyene copolymer [A]; a predetermined SiH group-containing compound [B-1] having two SiH groups per molecule and/or a predetermined SiH group-containing compound [B-2] having three SiH groups per molecule; and a predetermined methacrylic acid ester compound [C].

## Description

### Technical field

The present invention relates to a rubber composition and the use thereof. Specifically, the present invention relates to a rubber composition which can be used for various gasket materials such as fuel cell gasket materials, various sealing materials and the like, the fuel cell gasket material and the sealing material obtainable from the rubber composition, and main bodies on which said materials are mounted.

### Background art

A fuel cell is an efficient and clean power-generating system, wherein electricity is directly extracted through a reverse reaction of the electrolysis of water, i.e. through a chemical reaction between hydrogen and oxygen, and fuel cells are attracting interest as a new energy system for automobiles and households. Low cost materials with superior heat resistance, acid resistance, gas permeation resistance and high-speed moldability are desired as a cell-sealing material of a fuel cell. Under the current circumstances, fluororubber is used from the viewpoint of heat resistance and acid resistance, butyl rubber is used from the viewpoint of gas permeation resistance, and silicone rubber is used from the viewpoint of heat resistance and high-speed moldability, but the ordinary millable materials are insufficient in terms of satisfying the requirement of high-speed moldability, and the application of LIM (Liquid Injection Molding) with the use of liquid silicone rubber is under consideration.

However, although silicone rubber excels in heat resistance and high-speed moldability, the acid resistance and gas permeation resistance thereof are not sufficient. Furthermore, increase of the electricity-generating reaction temperature is under consideration with a view to improve the eletcricity-generating performance, and superior high-temperature resistance is required of gasket materials and sealing materials.

Due to such circumstances, rubber compositions with superior heat resistance, acid resistance, gas permeation resistance and high-speed moldability have been proposed (Patent Document 1, Patent Document 2). Said rubber compositions are liquid rubber compositions applicable to LIM molding, and since moldings with low hardness can be obtained from such rubber compositions, said compositions are suitable for use in fuel cell gasket materials that are required to have sealing properties with low reaction force even under a high compression condition.

There are fuel cells using organic resin such as PET, PEN and PBT as the cell of the fuel cell, and there are cases where the organic resin and the sealing material are adhered to each other for use. Conventionally, a silicone rubber composition and an organic resin have been adhered to each other by applying a primer onto the surface of the molded organic resin, applying thereto an uncured silicone rubber composition, and then curing the same. Said method, however, has a drawback that the process is complicated, since a primer needs to be applied to the surface of the organic resin.

Therefore, a silicone rubber composition which has a self-adhesive property towards organic resin but does not easily adhere to metals such as a mold has been proposed (Patent Document 3). However, since a silicone rubber composition does not have sufficient acid resistance and gas permeation resistance, there is a need for a rubber composition having a self-adhesive property towards organic resin such as PET, PEN and PBT as well as superior acid resistance and gas permeation resistance.

### Prior art documents

### Patent documents

Patent Document 1: JP Patent Appl. Publ. No. 2008-156574
Patent Document 2: JP Patent Appl. Publ. No. 2008-156575
Patent Document 3: JP Patent Appl. Publ. No. 6-172738

### Summary of the invention

### Problem to be solved by the invention

In consideration of the aforementioned circumstances, it is an object of the present invention to provide a rubber composition which excels in heat resistance, acid resistance, gas permeation resistance and high-speed moldability; which has low hardness and low reaction force and excels in high temperature compression set resistance; and which has a self-adhesive property towards organic resin, but does not easily adhere to metals such as a mold.

### Means for solving the problem

The first embodiment of the present invention concerns a rubber composition, characterized by comprising
[A] an ethylene / α-olefin / non-conjugated polyene copolymer satisfying the following (a) to (e):
   (a) said copolymer is a copolymer of ethylene, an α-olefin and a non-conjugated polyene,
   (b) carbon number of the α-olefin is from 3 to 20,
   (c) weight ratio of ethylene units /α-olefin units is from 35 / 65 to 95 / 5,
   (d) iodine value is within a range of from 0.5 to 50,
   (e) limiting viscosity [η] measured in a decalin solution at 135 °C is from 0.01 to 5.0 dl/g,
[B-1] an SiH group-containing compound represented by the following general formula [II] having two SiH groups in one molecule and/or [B-2] an SiH group-containing compound represented by the following general formula [III] having three SiH groups in one molecule, and
[C] at least one methacrylic acid ester compound selected from the group consisting of compounds represented by the following general formulas [IV], [V], [VI], [VII], [VIII] and [IX].

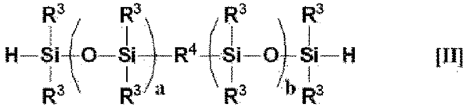

(In formula [II], R³ is a monovalent group having a carbon number of 1 to 10, and is an unsubstituted or substituted saturated hydrocarbon group or aromatic hydrocarbon group, where R³ in one molecule may be of the same or different kind; a is an integer of 0 to 20; b is an integer of 0 to 20; and R⁴ is a divalent organic group with a carbon number of 1 to 30 or an oxygen atom.)

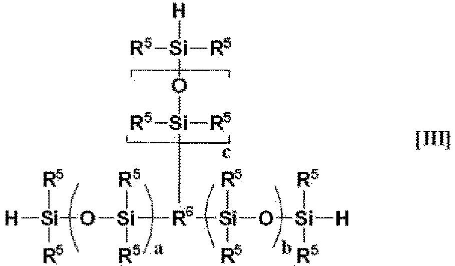

(In formula [III], R⁵ is a monovalent group having a carbon number of 1 to 10, and is an unsubstituted or substituted saturated hydrocarbon group or aromatic hydrocarbon group, where R⁵ in one molecule can be of the same or different kind; each of a, b and c is independently an integer of 0 to 20; and R⁶ is a trivalent organic group with a carbon number of 1 to 30.)

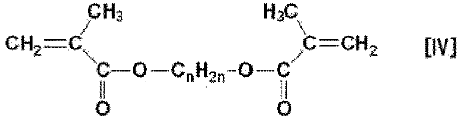

(In formula [IV], n is an integer of 0 to 10.)

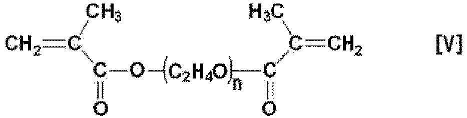

(In formula [V], n is an integer of 0 to 10.)

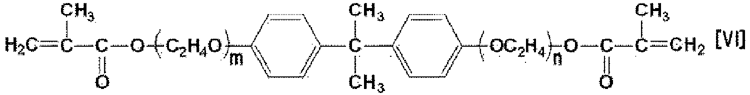

(In formula [VI], each of m and n is an integer of 0 to 10.)

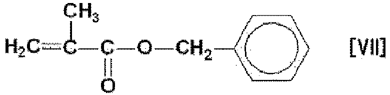

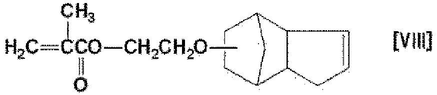

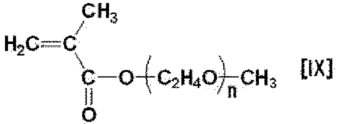

(In formula [IX], n is an integer of 0 to 10.)

The rubber composition according to the first embodiment of the present invention comprises an ethylene / α-olefin / non-conjugated polyene copolymer [A], an SiH group-containing compound having two SiH groups in one molecule [B-1] and/or an SiH group-containing compound having three SiH groups in one molecule [B-2] as a crosslinking agent, and the aforementioned prescribed methacrylic acid ester compound [C] as a component for imparting to the rubber composition a self-adhesive property towards organic resin.

The second embodiment of the present invention concerns a rubber composition, characterized in that the non-conjugated polyene is at least one kind of norbornene compound represented by the following general formula [I]:

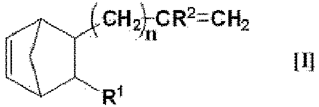

(In formula [I], n is an integer of 0 to 10; R¹ is a hydrogen atom or an alkyl group with a carbon number of 1 to 10; and R² is a hydrogen atom or an alkyl group with a carbon number of 1 to 5.)

The third embodiment of the present invention concerns a rubber composition comprising from 0.1 to 10 parts by weight of the methacrylic acid ester compound [C] based on 100 parts by weight of the ethylene / α-olefin / non-conjugated polyene copolymer [A].

The fourth embodiment of the present invention is an embodiment wherein the SiH group-containing compound having two SiH groups in one molecule [B-1] and the SiH group-containing compound having three SiH groups in one molecule [B-2] are used in combination, and said embodiment concerns a rubber composition comprising from 3.0 to 7.0 parts by weight of the SiH group-containing compound having two SiH groups in one molecule [B-1] and from 0.1 to 2.0 parts by weight of the SiH group-containing compound having three SiH groups in one molecule [B-2] based on 100 parts by weight of the ethylene / α-olefin / non-conjugated polyene copolymer [A].

The fifth embodiment of the present invention concerns a rubber composition, wherein the SiH group-containing compound having two SiH groups in one molecule [B-1] is at least one compound selected from the group consisting of compounds represented by the following formulas [II-1], [II-2], [II-3] and [II-4].

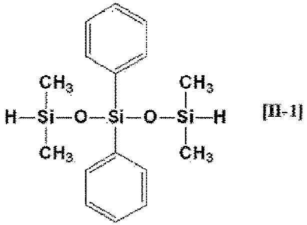

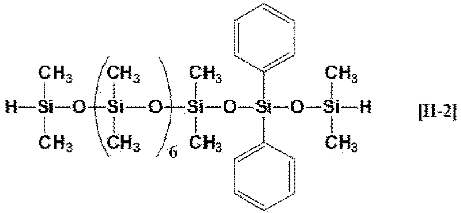

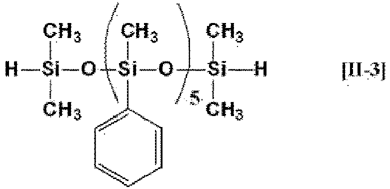

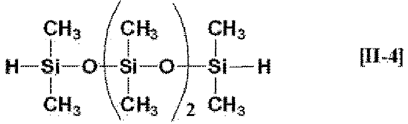

The sixth embodiment of the present invention concerns a rubber composition, wherein the SiH group-containing compound having three SiH groups in one molecule [B-2] is a compound represented by the formula [III-1]:

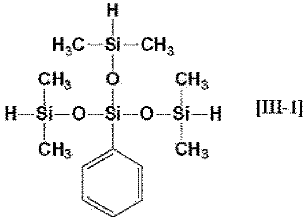

The seventh embodiment of the present invention concerns a fuel cell gasket material which consists of the aforementioned rubber composition. The eighth embodiment of the present invention concerns a fuel cell equipped with the fuel cell gasket material which consists of the aforementioned rubber composition. The ninth embodiment of the present invention concerns a sealing material which consists of the aforementioned rubber composition.

### Effect of the invention

The rubber composition according to the first embodiment of the present invention has superior heat resistance, acid resistance, gas permeation resistance and high-speed moldability, as well as low hardness, low reaction force and compression set resistance at high temperatures can be obtained. In addition, since the aforementioned prescribed methacrylic acid ester compound [C] is contained, the rubber composition has a self-adhesive property towards organic resin, although it does not easily adhere to metals such as a mold.

According to the second embodiment of the present invention, high-speed vulcanization is possible at the time of the crosslinking reaction because of the use of the norbornene compound of the general formula [I].

According to the third embodiment of the present invention, a suitable mold releasing property and a suitable adhesive property towards organic resin can be obtained, since 0.1 to 10 parts by weight of the methacrylic acid ester compound [C] are contained based on 100 parts by weight of the ethylene / α-olefin / non-conjugated polyene copolymer [A].

According to the fourth embodiment of the present invention, a molding with low hardness and low reaction force even under high compression conditions can be obtained by using components [B-1] and [B-2] in the aforementioned amounts. According to the fifth and sixth embodiments of the present invention, a molding with furthermore superior high-speed moldability, heat resistance, acid resistance, gas permeation resistance and compression set resistance can be obtained.

According to the seventh embodiment of the present invention, a fuel cell gasket material which has superior heat resistance, acid resistance, gas permeation resistance and high-speed moldability, and is self-adhesive towards organic resin, but does not easily adhere to metals such as a mold can be obtained. According to the eighth embodiment of the present invention, a superior fuel cell equipped with a gasket material having the aforementioned properties can be obtained. According to the ninth embodiment of the present invention, a sealing material which has superior heat resistance, acid resistance, gas permeation resistance and high-speed moldability, and is self-adhesive to organic resin, but does not easily adhere to metals such as a mold can be obtained. Said sealing material is applicable to various fields.

### Mode for carrying out the invention

The present invention will be explained as follows in detail.
The rubber composition according to the present invention comprises a prescribed ethylene / α-olefin / non-conjugated polyene copolymer [A], an SiH group-containing compound having two SiH groups in one molecule [B-1] and/or an SiH group-containing compound having three SiH groups in one molecule [B-2], and a prescribed methacrylic acid ester compound [C].

### Ethylene / α-olefin / non-conjugated polyene copolymer [A]

The copolymer [A] used in the present invention satisfies the following conditions at the least:
(a) said copolymer is a copolymer of ethylene, an α-olefin and a non-conjugated polyene,
(b) carbon number of the α-olefin is from 3 to 20,
(c) weight ratio of ethylene units / α-olefin units is from 35 / 65 to 95 / 5,
(d) iodine value is within a range of from 0.5 to 50,
(e) limiting viscosity [η] measured in a decalin solution at 135 °C is from 0.01 to 5.0 dl/g
Preferably, the non-conjugated polyene is at least one kind of norbornene compound represented by the following general formula [I]. Furthermore, the copolymer of ethylene, the α-olefin having a carbon number of 3 to 20, and the non-conjugated polyene is preferably a random copolymer.

Examples of the α-olefins with a carbon number of 3 to 20 include propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene and 12-ethyl-1-tetradecene. The carbon number of the α-olefin is preferably 3 to 10, and propylene, 1-butene, 1-hexene and 1-octene are particularly preferable. These α-olefins can be used alone or in a combination of two or more kinds.

Although there is no particular limitation to the non-conjugated polyene, the use of non-conjugated diene is preferable. The use of at least one kind of norbornene compound represented by the following general formula [I] is particularly preferable, since it enables high-speed vulcanization at the time of the crosslinking reaction.

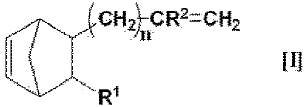

(In formula [I], n is an integer of 0 to 10; R¹ is a hydrogen atom or an alkyl group having a carbon number of 1 to 10; and R² is a hydrogen atom or an alkyl group with a carbon number of 1 to 5.)

Examples of the norbornene compound represented by the general formula [I] include 5-vinyl-2-norbornene, 5-(2-propenyl)-2-norbornene, 5-(3-butenyl)-2-norbornene, 5-(1-methyl-2-propenyl)-2-norbornene, 5-(4-pentenyl)-2-norbornene, 5-(1-methyl-3-butenyl)-2-norbornene, 5-(5-hexenyl)-2-norbornene, 5-(1-methyl-4-pentenyl)-2-norbornene, 5-(2,3-dimethyl-3-butenyl)-2-norbornene, 5-(2-ethyl-3-butenyl)-2-norbornene, 5-(6-heptenyl)-2-norbornene, 5-(3-methyl-5-hexenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene and 5-(1,2,3-trimethyl-4-pentenyl)-2-norbornene, preferably 5-vinyl-2-norbornene, 5-(2-propenyl)-2-norbornene, 5-(3-butenyl)-2-norbornene, 5-(4-pentenyl)-2-norbornene, 5-(5-hexenyl)-2-norbornene, 5-(6-heptenyl)-2-norbornene and 5-(7-octenyl)-2-norbornene. These norbornene compounds can be used alone or in a combination of two or more kinds.

Non-conjugated polyenes other than the norbornene compounds represented by the general formula [I] can be used without limitation as the non-conjugated polyene, and chain non-conjugated dienes, alicyclic non-conjugated dienes and triene compounds can be used, for example. These compounds can be used alone or in a combination of two or more kinds. The non-conjugated polyenes other than the aforementioned norbornene compounds represented by the general formula [I] can be used together with the aforementioned norbornene compounds represented by the general formula [I].

Examples of the chain non-conjugated dienes include 1,4-hexadiene, 3-methyl-1,4-hexadiene, 4-methyl-1,4-hexadiene, 5-methyl-1,4-hexadiene, 4,5-dimethyl-1,4-hexadiene and 7-methyl-1,6-octadiene.

Examples of the alicyclic non-conjugated dienes include 5-methylene-2-norbornene, 1-methyl-5-methylene-2-norbornene, 1-ethyl-5-methylene-2-norbornene, 5-ethylidene-2-norbornene, 5-isopropylidene-2-norbornene, 5-vinylidene-2-norbornene, 6-chloromethyl-5-isopropenyl-2-norbornene, dicyclopentadiene and methyl tetrahydroindene.

Examples of non-conjugated polyenes other than the aforementioned compounds include trienes such as 2,3-diisopropylidene-5-norbornene, 2-ethylidene-3-isopropylidene-5-norbornene and 2-propenyl-2,2-norbornadiene.

From the viewpoint of obtaining a molding with superior heat resistance, cold resistance, strength properties and high-speed moldability, the weight ratio of ethylene units / α-olefin units in the copolymer [A] is from 35 / 65 to 95 / 5, preferably from 40 / 60 to 90 / 10, more preferably from 45 / 55 to 85 / 15, and particularly preferably from 50 / 50 to 80 / 20.

From the viewpoint of preventing the deterioration of mechanical properties such as the tensile strength and the elongation while obtaining a rubber composition with high crosslinking efficiency, the iodine value of the copolymer [A] is from 0.5 to 50 (g/100g), preferably from 1 to 45 (g/100g), more preferably from 1 to 43 (g/100g), and particularly preferably from 3 to 40 (g/100g). Crosslinking efficiency deteriorates when the iodine value is below 0.5, and the mechanical properties deteriorate due to excessive crosslinking density when the iodine value is 50 or higher.

The limiting viscosity [η] of the copolymer [A] measured in a decalin solution at 135 °C is from 0.01 to 5.0 dl/g, preferably from 0.03 to 4.0 dl/g, more preferably from 0.05 to 3.5 dl/g, and particularly preferably from 0.07 to 3.0 dl/g. An embodiment where the limiting viscosity [η] of the copolymer [A] is 0.5 dl/g or lower, preferably below 0.3 dl/g, is particularly favorable when submitting the rubber composition to LIM molding. A rubber composition capable of providing a crosslinked rubber molding with superior strength properties and compression set resistance as well as superior prosessability can be obtained when the limiting viscosity [η] is within the aforementioned range.

It is suitable for the copolymer [A] according to the present invention to have low viscosity, and the upper limit of the complex viscosity (25 °C, 1 % strain) measured with the use of a viscoelastometer, MCR301, manufactured by Anton Paar (Australia), is 10⁵ Pa·S, preferably 4000 Pa·S, and particularly preferably 2000 Pa·S.

The copolymer [A] according to the present invention can be produced through copolymerization of ethylene, an α-olefin, and a non-conjugated polyene comprising the norbornene compound represented by the formula [I] in the presence of a polymerization catalyst. Specifically, said copolymer can be prepared through known and conventional methods disclosed in "Polymer Seizo Process" (published by K.K. Kogyo Chosakai, pages 365 to 378) and JP Patent Appl. Publ. Nos. 9-071617, 9-071618, 9-208615, 10-067823, 10-067824 and 10-110054, for example.

Examples of the polymerization catalyst include Ziegler catalysts which consist of a transition metal compound such as vanadium (V), zirconium (Zr), or titanium (Ti). and an organic aluminum compound (organic aluminium oxy compound), and metallocene catalysts which consist of a metallocene compound of a transition metal selected from the elements of group IVB of the periodic table and an organic aluminium oxy compound or an ionized ionic compound.

For example, the copolymer [A] of the present invention can be produced through copolymerization of ethylene, an α-olefin and the aforementioned non-conjugated polyene (preferably a norbornene compound containing a vinyl group) in the presence of a catalyst containing as the main components a vanadium compound (a) and an organic aluminum compound (b) mentioned below at a polymerization temperature of from 30 to 60 °C (preferably 30 to 50 °C) and a polymerization pressure of from 4 to 12 kgf/cm² (preferably 5 to 8 kgf/cm²) by supplying the non-conjugated polyene and ethylene in a molar ratio (non-conjugated polyene / ethylene) of from 0.01 to 0.2. Said copolymerization reaction is preferably carried out in a hydrocarbon medium.

Examples of the vanadium compound (a) include vanadium compounds represented by the general formula:

VO(OR)aXb or V(OR)cXd

(wherein R is a hydrocarbon group, 0≤a≤3,0≤b≤3,2≤a+b≤3,0≤c≤4,0≤ d≤ 4, and 3≤ c + d≤ 4) or electron donor adducts thereof.

More specifically, examples of the vanadium compound (a) include VOCl₃, VO(OC₂H₅)Cl₂, VO(OC₂H₅)₂Cl, VO(O-iso-C₃H₇)Cl₂, VO(O-n-C₄H₉)Cl₂, VO(OC₂H₅)₃, VOBr3, VCl₄, VOCl₃, VO(O-n-C₄H₉)₃ and VCl₃·2OC₆H₁₂OH.

Examples of the organic aluminum compound (b) include trialkyl aluminum such as triethyl aluminum, tributyl aluminum and triisopropyl aluminum; dialkyl aluminum alkoxides such as diethyl aluminum ethoxide and dibutyl aluminum butoxide; alkyl aluminum sesquialkoxides such as ethyl aluminum sesquiethoxide and butyl aluminum sesquibutoxide; partially alkoxylated alkyl aluminum having an average composition represented by R_{0.5}Al(OR)_{0.5}, etc.; dialkyl aluminum halides such as diethyl aluminum chloride, dibutyl aluminum chloride and diethyl aluminum bromide; partially halogenated alkyl aluminum including alkyl aluminum sesquihalides such as ethyl aluminum sesquichloride, butyl aluminum sesquichloride and ethyl aluminum sesquibromide, and alkyl aluminum dihalides such as ethyl aluminum dichloride, propyl aluminum dichloride and butyl aluminum dibromide; partially hydrogenated alkyl aluminum including dialkyl aluminum hydrides such as diethyl aluminum hydride and dibutyl aluminum hydride, and alkyl aluminum dihydrides such as ethyl aluminum dihydride and propyl aluminum dihydride; and partially alkoxylated and halogenated alkyl aluminum such as ethyl aluminum ethoxychloride, butyl aluminum butoxychloride and ethyl aluminum ethoxybromide.

Although it is preferable for the rubber composition of the present invention to contain the aforementioned ethylene / α-olefin / non-conjugated polyene copolymer [A] alone as the resin component, resin components other than the aforementioned ethylene / α-olefin / non-conjugated polyene copolymer [A] can be contained in the rubber composition according to necessity within the extent that said components do not interfere with the object of the present invention. Organopolysiloxane, for example, can be used as a resin component other than the copolymer [A]. Having the ability to enhance the heat aging resistance of the rubber composition, organopolysiloxane contributes to the improvement of the heat aging resistance of fuel cell gasket materials and various sealing materials. The content of organopolysiloxane in terms of the weight ratio of ethylene / α-olefin / non-conjugated polyene copolymer : organopolysiloxane is from 99.9 : 0.1 to 5 : 95, preferably from 99.9 : 0.1 to 60 : 40, particularly preferably from 99.9 : 0.1 to 70 : 30.

### SiH group-containing compounds

The SiH group-containing compound having two SiH groups in one molecule [B-1] used in the present invention is represented by the following general formula [II]:

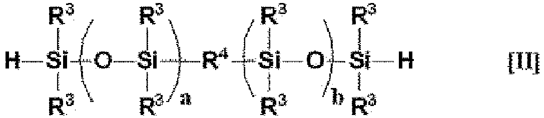

(In formula [II], R³ is a monovalent group having a carbon number of 1 to 10, and is an unsubstituted or substituted saturated hydrocarbon group or aromatic hydrocarbon group, where R³ in one molecule may be of the same or different kind; a is an integer of 0 to 20; b is an integer of 0 to 20; and R⁴ is a divalent organic group having a carbon number of 1 to 30 or an oxygen atom.)

The SiH group-containing compound having two SiH groups in one molecule [B-1] has SiH groups at both molecular ends, and has two SiH groups per one molecule. Examples of R³ in the general formula [II] include methyl group, ethyl group, propyl group, isopropyl group, butyl group, amyl group, cyclopentyl group, hexyl group, cyclohexyl group, octyl group, chloromethyl group, 2-chloroethyl group, 3-chloropropyl group, phenyl group, phenylmethyl group, 2-phenylethyl group and 2-phenylpropyl group, among which methyl group, ethyl group and phenyl group are preferable. Each of a and b is an integer of 0 to 20, preferably an integer of 10 or lower, more preferably an integer of 5 or lower, particularly preferably an integer of 2 or lower, and the most preferably, a and b represent the same integer that is 2 or lower.

Examples of the SiH group-containing compound having two SiH groups in one molecule [B-1] represented by the general formula [II] include compounds represented by the following formulas [II-1] to [11-4], preferably the compounds represented by the formula [II-1]. These SiH group-containing compounds [B-1] can be used alone or in a combination of two or more kinds.

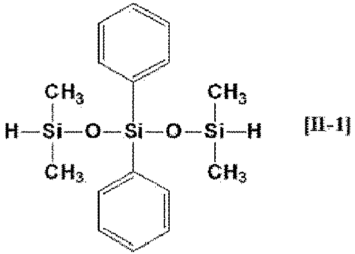

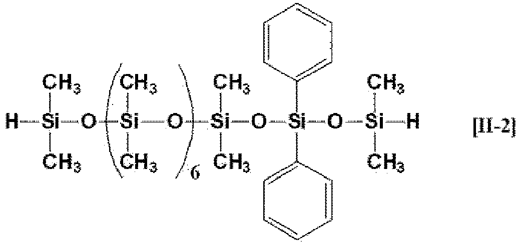

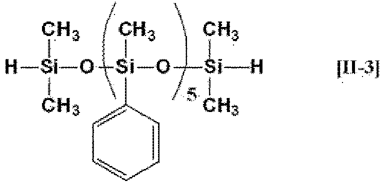

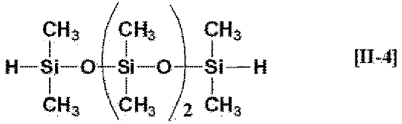

With the use of the aforementioned Component [B-1] as a crosslinking agent, fuel cell gasket materials and various sealing materials with improved mechanical properties can be obtained, while maintaining the superior properties such as heat resistance, acid resistance, gas permeation resistance and high-speed moldability. It is preferable for Component [B-1] to be contained in the rubber composition in an amount such that 0.2 to 10 hydrogen atoms bonded to silicon atoms can be provided per one aliphatic unsaturated bond contained in the resin component of the rubber composition.

Since the crosslinking density can be suppressed to a certain extent in a rubber composition obtained by adding the SiH group-containing compound having two SiH groups in one molecule [B-1] alone to the ethylene / α-olefin / non-conjugated polyene copolymer [A], a molding with superior elongation properties can be produced using the rubber composition of the present invention. When adding the SiH group-containing compound having two SiH groups in one molecule [B-1] alone to the copolymer [A], the content of said compound [B-1] is from 2 to 15 parts by weight based on 100 parts by weight of the ethylene / α-olefin / non-conjugated polyene copolymer [A] from the viewpoint of keeping the rubber hardness of the molding low, while maintaining the crosslinking density, and is preferably from 3 to 8 parts by weight from the viewpoint of maintaining balance between the rubber hardness and the crosslinking density of the molding.

The SiH group-containing compound having three SiH groups in one molecule [B-2] used in the present invention is represented by the following general formula [III].

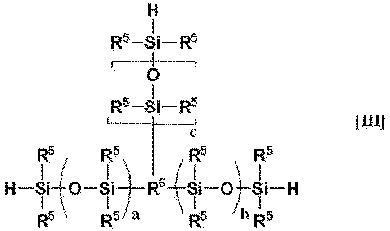

(In formula [III], R⁵ is a monovalent group having a carbon number of 1 to 10, and is an unsubstituted or substituted saturated hydrocarbon group or aromatic hydrocarbon group, where R⁵ in one molecule may be of the same or different kind; each of a, b and c is independently an integer of 0 to 20; and R⁶ is a trivalent organic group having a carbon number of 1 to 30.)

The SiH group-containing compound [B-2] has SiH groups at three molecular terminals and has three SiH groups in one molecule. Examples of R⁵ in the general formula [III] are equivalent to those of R³ in the general formula [II], and include methyl group, ethyl group, propyl group, isopropyl group, butyl group, amyl group, cyclopentyl group, hexyl group, cyclohexyl group, octyl group, chloromethyl group, 2-chloroethyl group, 3-chloropropyl group, phenyl group, phenylmethyl group, 2-phenylethyl group, and 2-phenylpropyl group, among which methyl group, ethyl group and phenyl group are preferable. Each of a, b and c is independently an integer of 0 to 20. Preferably, each of a, b and c is an integer of 10 or less, more preferably an integer of 5 or less, particularly preferably an integer of 2 or less, and the most preferably, a, b and c represent the same integer that is 2 or less. R⁶ in the general formula [III] is a trivalent organic group having a carbon number of 1 to 30, preferably containing silicon.

Preferable examples of the SiH group-containing compound having three SiH groups in one molecule [B-2] include the compounds represented by the following general formula [III-1].

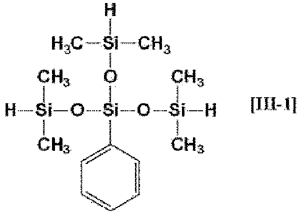

Since three-dimensional crosslinking occurs in a rubber composition obtained by adding the SiH group-containing compound having three SiH groups in one molecule [B-2] alone to the ethylene / α-olefin / non-conjugated polyene copolymer [A], a molding with a superior mechanical strength can be obtained. When adding the SiH group-containing compound [B-2] having three SiH groups in one molecule alone to the copolymer [A], the content of the compound [B-2] is 0.1 to 2.0 parts by weight, preferably 0.2 to 1.0 parts by weight, based on 100 parts by weight of the ethylene / α-olefin / non-conjugated polyene copolymer [A] in terms of the balance between mechanical strength and the tensile elongation and in terms of the compression set resistance.

A rubber composition with superior high-speed moldability and superior gas permeation resistance, low hardness and low reaction force, and reduced compression set ratio at high (150 °C) and low (-30 °C) temperatures can be obtained when adding, to the ethylene / α-olefin / non-conjugated polyene copolymer [A], the SiH group-containing compound having two SiH groups in one molecule [B-1], which excels in elongation, in combination with the SiH group-containing compound having three SiH groups in one molecule [B-2], which excels in mechanical strength. In order to obtain the aforementioned properties, such a rubber composition contains 3.0 to 7.0 parts by weight of the SiH group-containing compound having two SiH groups in one molecule [B-1] and 0.1 to 2.0 parts by weight of the SiH group-containing compound having three SiH groups in one molecule [B-2] based on 100 parts by weight of the ethylene / α-olefin / non-conjugated polyene copolymer [A], preferably 4.0 to 6.5 parts by weight of the SiH group-containing compound having two SiH groups in one molecule [B-1] and 0.2 to 1.0 parts by weight of the SiH group-containing compound having three SiH groups in one molecule [B-2] based on 100 parts by weight of the ethylene / α-olefin / non-conjugated polyene copolymer [A].

### [C] Methacrylic acid ester compound

The methacrylic acid ester compound [C] used in the present invention is represented by the following general formula [IV], [V], [VI], [VII], [VIII] or [IX].

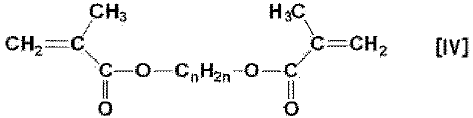

(In formula [IV], n is an integer of from 1 to 10.)

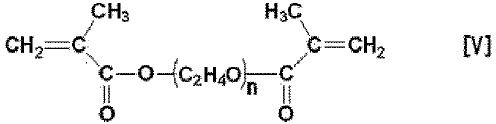

(In formula [V], n is an integer of from 1 to 10.)

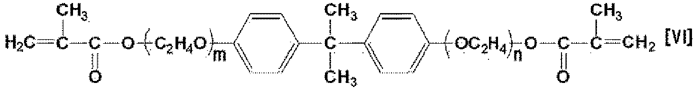

(In formula [VI], each of m and n is an integer of from 1 to 10.)

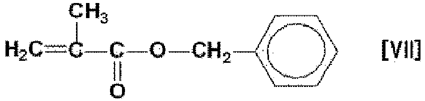

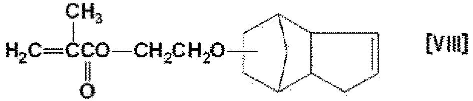

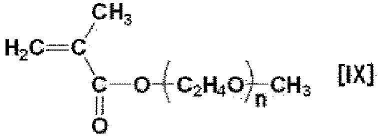

(In formula [IX], n is an integer of from 1 to 10.)

The methacrylic acid ester compound [C] prescribed above is selected from methacrylate compounds having methacrylic acid at a terminal of one molecule. This methacrylic acid ester compound [C] is used as a component for imparting self-adhesive properties to the rubber composition of the present invention, i.e. for imparting a superior mold-releasing property with a tendency not to adhere to metals such as a mold, at the same time as imparting adhesive property towards organic resin with high adhesion strength to organic resin.

Each of n in formulas [IV], [V] and [IX] and m and n in formula [VI] is an integer of from 1 to 10 from the viewpoint of imparting a self-adhesive property, preferably an integer of from 1 to 7 from the viewpoint of the balance between the prevention of the reduction of the self-adhesive property due to the occurrence of bleeding caused by low molecular weight and the superior self-adhesive property achievable by the low molecular weight, and particularly preferably an integer of from 1 to 4 from the viewpoint of further improving the self adhesive property. The methacrylic acid ester compound [C] prescribed above can be obtained through known methacrylic acid ester synthesis processes.

The lower limit of the content of the methacrylic acid ester compound [C] is 0.1 parts by weight based on 100 parts by weight of the ethylene / α-olefin / non-conjugated polyene copolymer [A] in terms of imparting to the rubber compound both mold-releasing property and adhesive property towards organic resin, preferably 0.5 parts by weight, and particularly preferably 1.0 parts by weight, in terms of the balance between the adhesive property towards organic resin and the prevention of bleeding. The upper limit of the content of the methacrylic acid ester compound [C] is 10 parts by weight based on 100 parts by weight of the ethylene / α-olefin / non-conjugated polyene copolymer [A] in terms of preventing the bleeding and the reduction of adhesive property towards organic resin, preferably 8.0 parts by weight, and particularly preferably 5.0 parts by weight, in terms of the balance between the adhesive property towards organic resin and the prevention of bleeding. The methacrylic acid ester compounds [C] can be used alone or in combination of two or more kinds.

### Rubber composition

The rubber composition of the present invention comprises an ethylene / α-olefin / non-conjugated polyene copolymer [A], an SiH group-containing compound having two SiH groups in one molecule [B-1] and/or an SiH group-containing compound having three SiH groups in one molecule [B-2], and a prescribed methacrylic acid ester compound [C]. If necessary, the rubber composition may further comprise components such as catalysts and reaction inhibitors mentioned below.

The rubber composition of the present invention can be produced by kneading the copolymer [A] with components such as a rubber reinforcing agent, an inorganic filler and a softener preferably for 3 to 10 minutes at a temperature of 50 to 180 °C with the use of an internal mixer (sealed mixer) such as a Banbury mixer, a kneader, a planetary mixer or an inter mix, or a two-roll or three-roll kneader, then mixing thereto the SiH group-containing compound [B-1] and/or SiH group-containing compound [B-2] and the methacrylic acid ester compound [C] with the use of a roller such as an open roller or a kneader for 1 to 30 minutes at a rolling temperature of 100 °C or lower, and then sheeting the mixture.
If necessary, the below-mentioned catalysts, reaction inhibitors and the like can be further mixed.

An addition reaction catalyst is used when carrying out crosslinking with the use of the SiH group-containing compound [B-1] and/or the SiH group-containing compound [B-2] in the production process of the rubber composition of the present invention. Said catalyst promotes the addition reaction (such as hydrosilylation reaction with an alkene) between the alkenyl group contained in the copolymer [A] and the SiH group contained in the SiH group-containing compound [B-1] and/or [B-2].

Addition reaction catalysts consisting of platinum group elements such as platinum-based catalysts, palladium-based catalysts, and rhodium-based catalysts are normally used as such a catalyst, and a platinum-based catalyst is preferably used in the present invention. It is desirable to use a complex of a Group 8 element metal of the periodic table, particularly preferably platinum, and a compound containing a vinyl group and/or a carbonyl group, including a platinum-based catalyst.

Although there is no particular limitation to the catalysts, as mentioned above, from the viewpoint of obtaining a rubber composition capable of forming a crosslinked rubber molding with appropriate crosslinking density and superior mechanical strength and elongation, the catalyst is used in an amount of 0.1 to 100000 weight ppm, preferably 0.1 to 10000 weight ppm, more preferably 1 to 5000 weight ppm, and particularly preferably 5 to 1000 weight ppm based on the amount of the main resin component, i.e. the total amount of the copolymer [A] and other resin components that are added according to necessity. It is disadvantageous in terms of cost when the catalyst is used in a ratio exceeding 100000 weight ppm. It is also possible to obtain a crosslinked rubber molding by irradiating light, γ ray, electron ray and the like to an uncrosslinked rubber composition formed from a rubber composition free of catalyst.

At the time of crosslinking the rubber composition of the present invention, it is possible to carry out both addition crosslinking and radical crosslinking by using an organic peroxide in addition to the aforementioned catalyst. The content of the organic peroxide is 0.1 to 10 parts by weight based on 100 parts by weight of the total of the copolymer [A] and other resin components added according to necessity. Conventionally known organic peroxides that are generally used for rubber crossliking can be used as the organic peroxide.

If necessary, it is possible to use a reaction inhibitor together with the aforementioned catalyst at the time of crossliking. Examples of the reaction inhibitor include ethynyl group-containing alcohols such as ethynyl cyclohexanol, acrylonitrile, amide compounds such as N,N-diallylacetamide, N,N-diallylbenzamide, N,N,N',N'-tetraallyl-o-phthalic acid diamide, N,N,N',N'-tetraallyl-m-phthalic acid diamide, and N,N,N',N'-tetraallyl-p-phthalic acid diamide, sulfur, phosphorus, nitrogen, amine compounds, sulfur compounds, phosphorus compounds, tin, tin compounds, tetramethyl tetravinyl cyclotetrasiloxane, and organic peroxides such as hydroperoxide.

The content of the reaction inhibitor is 0.0001 to 50 parts by weight, preferably 0.0001 to 30 parts by weight, more preferably 0.0001 to 20 parts by weight, particularly preferably 0.0001 to 10 parts by weight, and the most preferably 0.0001 to 5 parts by weight based on 100 parts by weight of the total of the copolymer [A] and other resin components added thereto according to necessity. It is disadvantageous in terms of cost increase when the content of the reaction inhibitor exceeds 50 parts by weight.

If necessary, it is furthermore possible to add to the rubber composition of the present invention additives such as conventionally known rubber reinforcing agents, inorganic fillers, softeners, age inhibitors, processing aids, vulcanization accelerators, organic peroxides, crosslinking aids, foaming agents, foaming aids, colorants, dispersants, fire retardants and the like according to the purpose, etc. of the crosslinked product, within amounts that would not impair the object of the present invention.

A rubber reinforcing agent is used for improving the mechanical properties of the crosslinked (vulcanized) rubber such as the tensile strength, tear strength and wear resistance. Examples of the rubber reinforcing agent include carbon black, finely divided silicic acid and silica. The upper limit of the content of the rubber reinforcing agent is 300 parts by weight, preferably 200 parts by weight, based on 100 parts by weight of the sum of the copolymer [A] and other resin components that are added according to necessity. Said rubber reinforcing agents can be used alone or in a combination of two or more kinds.

Examples of inorganic fillers include light calcium carbonate, heavy calcium carbonate, talc, clay, diatom earth and the like. The upper limit of the content of the inorganic filler is 300 parts by weight, preferably 200 parts by weight, based on 100 parts by weight of the total of the copolymer [A] and other resin components added thereto according to necessity. Said inorganic fillers can be used alone or in a combination of two or more kinds.

Known softeners that are generally used for rubber can be used as the softener. Examples of such softeners include petroleum-based softeners such as process oils, lubricants, paraffin, fluidized paraffin, petroleum asphalt and petroleum jelly; coal tar-based softeners such as coal tar and coal tar pitch; fatty oil-based softeners such as castor oil, linseed oil, rapeseed oil and palm oil; waxes such as beeswax, carnauba wax and lanolin; fatty acids and fatty acid salts such as ricinoleic acid, palmitic acid, barium stearate, calcium stearate and zinc laurate; and synthetic polymers such as petroleum resin, atactic polypropylene and coumarone indene resin. Among said examples, petroleum-based softeners, particularly process oils, are preferable. The content of said softeners can be freely determined according to the purpose of the crosslinked product. Said softeners can be used alone or in a combination of two or more kinds.

If necessary, age inhibitors can be used in order to improve heat resistance. Various conventionally known age inhibitors can be used and age inhibitors based on amine, hindered phenol and sulfur can be used, for example. Age inhibitors can be used in amounts that would not impair the object of the present invention. Said age inhibitors can be used alone or in a combination of two or more kinds.

Known compounds normally used for rubber processing can be used as the processing aid. Specific examples of such processing aids are higher fatty acids such as ricinoleic acid, stearic acid, palmitic acid and lauric acid; salts of higher fatty acids such as barium stearate, zinc stearate and calcium stearate; and esters of higher fatty acids such as ricinolic acid, stearic acid, palmitic acid and lauric acid. The upper limit of the content of the processing aid is 10 parts by weight, preferably 5 parts by weight, based on 100 parts by weight of the total amount of the copolymer [A] and other resin components that are added according to necessity, but said content can be freely determined according to the desired physical properties.

It is preferable to use a crosslinking aid in combination when using an organic peroxide besides the catalyst in the crosslinking process. Examples of the crosslinking aid include sulfur, quinonedioxime-based compounds such as p-quinonedioxime, methacrylate-based compounds such as polyethylene glycol dimethacrylate, allyl-based compounds such as diallyl phthalate and triallyl cyanurate, maleimide-based compounds, and divinyl benzene. The content of such a crosslinking aid is from 0.5 to 2 mol based on 1 mol of the organic peroxide, preferably in an equimolar amount.

In the rubber composition of the present invention, other known rubbers can be used in combination as other resin components within an amount that would not impair the object of the present invention. Examples of such rubbers include isoprene-based rubbers such as natural rubber (NR) and isoprene rubber (IR) and conjugated diene-based rubbers such as butadiene rubber (BR), styrenebutadiene rubber (SBR), acrylonitrile-butadiene rubber (NBR) and chloroprene rubber (CR). Conventionally known ethylene / α-olefin-based copolymer rubbers such as ethylene / propylene random copolymer (EPR) and ethylene /α-olefin / non-conjugated polyene copolymers other than the copolymer [A] of the present invention, such as an ethylene / propylene / non-conjugated diene copolymer (EPDM, etc.), can also be used.

Since the aforementioned rubber composition of the present invention has superior heat resistance, acid resistance, gas permeation resistance, high-speed moldability and compression set ratio, as well as self-adhesion towards organic resin, it is useful for fuel cell gasket materials and various sealing materials, for example. The rubber composition of the present invention is suitable for LIM molding, but moldings can also be produced through other molding processes. The fuel cell gasket materials and sealing materials according to the present invention best exert their properties when used in the form of a crosslinked rubber molding. Therefore, the fuel cell gasket materials and sealing materials according to the present invention are normally in the form of crosslinked rubber moldings.

A crosslinked rubber molding can be suitably produced from the rubber composition of the present invention by preparing an uncrosslinked rubber composition according to the aforementioned preparation process of a rubber composition, molding said rubber composition into a desired shape, and then crosslinking the molding, as in the vulcanization (crosslinking) process of rubber in general.

Crosslinking can be carried out at the same time as molding, or by introducing the molding to a vulcanization tank. For example, molding and crosslinking can be carried out by molding the rubber composition of the present invention mixed with the use of various kneading apparatuses such as a three roll mill, an open roll mill, an open two roll mill, a Banbury mixer, an internal mixer, a kneader, a planetary mixer and a high shear mixer under a crossliking condition of from 80 to 230 °C, preferably from 100 to 180 °C, and then, if necessary, heat-treating (secondary vulcanization) the crosslinked molding for about 0.5 to 24 hours at about 100 to 230 °C, preferably about 120 to 150 °C in an air oven such as a Geer oven or a thermostat bath. The crosslinking or the secondary crosslinking (secondary vulcanization) can also be carried out by irradiation of light, γ-ray, electron beam and the like, and crosslinking can also be carried out at ordinary temperatures. A crosslinked rubber molding, i.e. the materials according to the present invention, can be obtained through the aforementioned method.

The crosslinking process can be carried out with or without the use of a mold. The crosslinking process is normally carried out continuously when a mold is not used. A heating tank utilizing hot air, glass beads fluidized bed, UHF (ultrahigh frequency electromagnetic wave), steam and the like can be used as the means for heating in the vulcanization tank.

### Examples

The present invention will be further explained in detail based on the following examples, but the present invention is not limited to these examples.

The components used in the rubber composition used in Examples 1 to 7 and Comparative Examples 1 to 8 are as follows.

### - Ethylene / α-olefin / non-conjugated polyene copolymer [A]

An ethylene / propylene / 5-vinyl-2-norbornene random copolymer ("PX-062", manufactured by Mitsui Kagaku K.K.; ethylene content: 52.7 % by weight, propylene content: 42.6 % by weight, 5-vinyl-2-norbornene content: 4.7 % by weight, iodine value: 25 g / 100 g, complex viscosity at 25 °C (complex viscosity measured with the use of a viscoelastometer, MCR-301, manufactured by Anton Paar) (1 % strain): 1100 Pa·sec, limiting viscosity [η] measured in a decalin solution at 135 °C: 0.28 dl/g) was used in each of Examples 1 to 7 and Comparative Examples 1 to 8. - SiH group-containing compound having two SiH groups in one molecule [B-1] An SiH group-containing compound of the following formula [II-I] was used in each of Examples 1 to 7 and Comparative Examples 1 to 8.

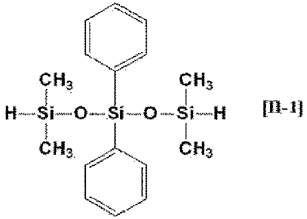

### - SiH group-containing compound having three SiH groups in one molecule [B-2]

An SiH group-containing compound of the following formula was used in each of Examples 1 to 7 and Comparative Examples 1 to 8.

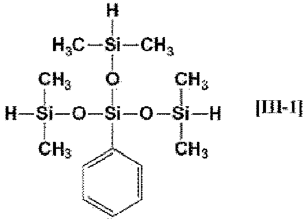

### - Methacrylic acid ester compound [C]

Compound 1 below was used in Examples 1 and 2, Compound 2 below was used in Example 3, Compound 3 below was used in Example 4, Compound 4 below was used in Example 5, Compound 5 below was used in Example 6, and Compound 6 below was used in Example 7. Compound 7 below was used in Comparative Example 1, Compound 8 below was used in Comparative Example 2, Compound 9 below was used in Comparative Example 3, Compound 10 below was used in Comparative Example 4, Compound 11 below was used in Comparative Example 5, Compound 12 below was used in Comparative Example 6, Compound 13 below was used in Comparative Example 7, and Compound 14 below was used in Comparative Example 8.

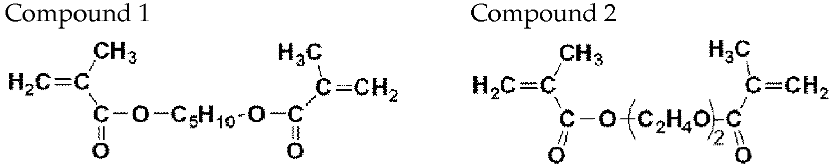

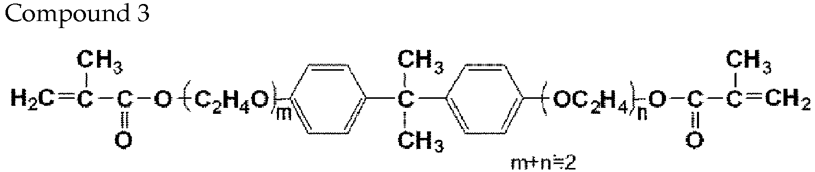

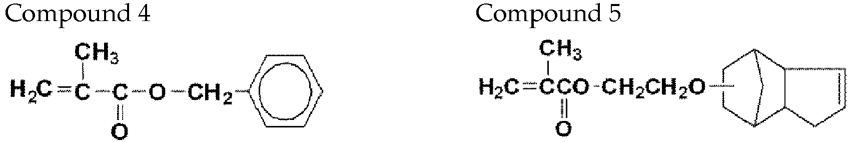

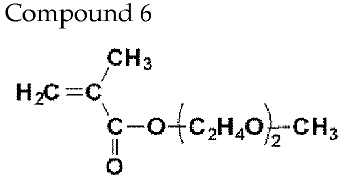

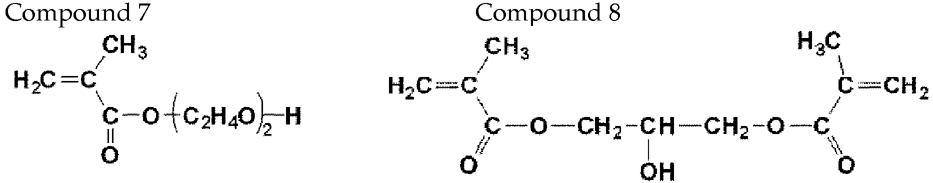

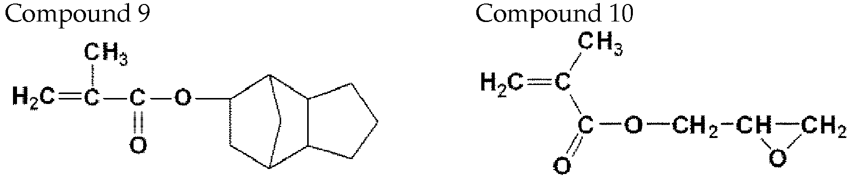

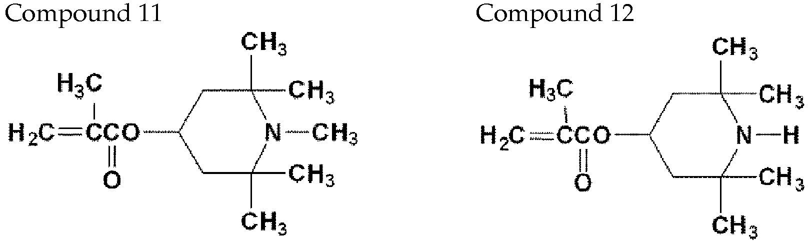

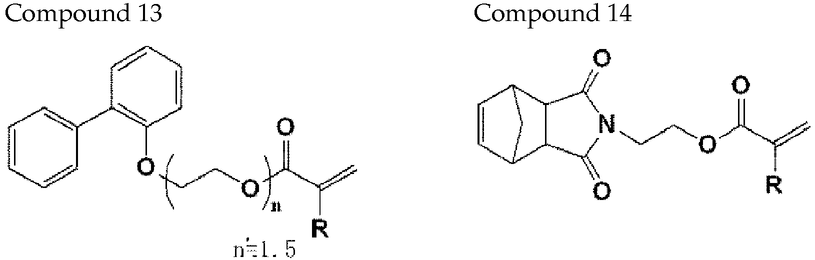

### - Rubber reinforcing agent

### Rubber reinforcing agent (1)

Carbon black ("Asahi #50HG", manufactured by Asahi Carbon; iodine adsorption: 19 mg/g, average particle size: 85 µm, DBP absorption: 110 cm³ / 100 g)

### Rubber reinforcing agent (2)

Surface-treated precipitated silica ("SS-95", manufactured by Toso Silica; BET surface area: 50 m²/g, secondary particle size (average particle size evaluated through the Coulter counter method): 2.4 µm, M value: 65)

### - Age inhibitor

3-(3,5-di-t-butyl-4-hydroxyphenyl)propionic acid stearate ("Irganox 1076", manufactured by Ciba Specialty Chemicals)

### - Reaction inhibitor

### 1-ethynyl-1-cyclohexanol

### - Catalyst

### Platinum-1,3,5,7-tetravinylmethylcyclosiloxane complex (platinum concentration: 0.5 % by weight, vinyl-terminated siloxane oil solution)

The compounded amount of each component in Examples 1 to 7 and in Comparative Examples 1 to 8 is shown in Table 1 and Table 2, respectively. The amounts are shown in Tables 1 and 2 in terms of parts by weight.

**[Table 1]**

| | | Example 1 | Example 2 | Example 3 | Example 4 | Example 5 | Example 6 | Example 7 |
|---|---|---|---|---|---|---|---|---|
| Ethylene/α-olefin/non-conjugated polyene copolymer [A] | | 100 | 100 | 100 | 100 | 100 | 100 | 100 |
| SiH group-containing compound having two SiH groups in one molecule [B-1] | | 5.0 | 5.0 | 5.0 | 5.0 | 5.0 | 5.0 | 5.0 |
| SiH group-containing compound having three SiH groups in one molecule [B-2] | | 0.3 | 0.3 | 0.3 | 0.3 | 0.3 | 0.3 | 0.3 |
| Methacrylic acid ester compound [C] | Compound 1 | 2.0 | 0.5 | | | | | |
| | Compound 2 | | | 2.0 | | | | |
| | Compound 3 | | | | 2.0 | | | |
| | Compound 4 | | | | | 2.0 | | |
| | Compound 5 | | | | | | 2.0 | |
| | Compound 6 | | | | | | | 2.0 |
| Rubber reinforcing agent (1) | | 15 | 15 | 15 | 15 | 15 | 15 | 15 |
| Rubber reinforcing agent (2) | | 30 | 30 | 30 | 30 | 30 | 30 | 30 |
| Age inhibitor | | 0.4 | 0.4 | 0.4 | 0.4 | 0.4 | 0.4 | 0.4 |
| Reaction inhibitor | | 0.1 | 0.1 | 0.1 | 0.1 | 0.1 | 0.1 | 0.1 |
| Catalyst | | 0.6 | 0.6 | 0.6 | 0.6 | 0.6 | 0.6 | 0.6 |

**[Table 2]**

| | | Comparative Example 1 | Comparative Example 2 | Comparative Example 3 | Comparative Example 4 | comparative Example 5 | Comparative Example 6 | Comparative Example 7 | Comparative Example 8 |
|---|---|---|---|---|---|---|---|---|---|
| Ethylene/α-olefin/non-conjugated polyene copolymer [A] | | 100 | 100 | 100 | 100 | 100 | 100 | 100 | 100 |
| SiH group-containing compound having two SiH groups in one molecule [B-1] | | 5.0 | 5.0 | 5.0 | 5.0 | 5.0 | 5.0 | 5.0 | 5.0 |
| SiH group-containing compound having three SiH groups in one molecule [B-2] | | 0.3 | 0.3 | 0.3 | 0.3 | 0.3 | 0.3 | 0.3 | 0.3 |
| Methacrylic acid ester compound [C] | Compound 7 | 2.0 | | | | | | | |
| | Compound 8 | | 2.0 | | | | | | |
| | Compound 9 | | | 2.0 | | | | | |
| | Compound 10 | | | | 2.0 | | | | |
| | Compound 11 | | | | | 2.0 | | | |
| | Compound 12 | | | | | | 2.0 | | |
| | Compound 13 | | | | | | | 2.0 | |
| | Compound 14 | | | | | | | | 2.0 |
| Rubber reinforcing agent (1) | | 15 | 15 | 15 | 15 | 15 | 15 | 15 | 15 |
| Rubber reinforcing agent (2) | | 30 | 30 | 30 | 30 | 30 | 30 | 30 | 30 |
| Age inhibitor | | 0.4 | 0.4 | 0.4 | 0.4 | 0.4 | 0.4 | 0.4 | 0.4 |
| Reaction inhibitor | | 0.1 | 0.1 | 0.1 | 0.1 | 0.1 | 0.1 | 0.1 | 0.1 |
| Catalyst | | 0.6 | 0.6 | 0.6 | 0.6 | 0.6 | 0.6 | 0.6 | 0.6 |

The aforementioned components were kneaded for 10 minutes with a three roll mill at a roll temperature of 23 to 25 °C to obtain the rubber compositions for use in Examples 1 to 7 and Comparative Examples 1 to 8. The obtained rubber compositions were poured into a test sheet mold (140 x 140 x 2 mm) and then submitted to compression molding for 5 minutes at a hot plate preset temperature of 150 °C and a mold compression pressure of 80 MPa to obtain crosslinked rubber sheets. The sheets were further submitted to secondary vulcanization for 1 hour at 150 °C in an air oven to obtain test samples. The properties of the obtained test samples of crosslinked rubber sheets were measured or evaluated according to the following methods.

### (1) Hardness

In accordance with JIS K6253, the A hardness was measured by the durometer method at a measuring temperature of 23 °C.

### (2) Tensile test

The tensile strength at rupture and the elongation at rupture of the crosslinked sheets were measured by carrying out a tensile test in accordance with JIS K6251 at a measuring temperature of 23 °C and a tensile rate of 500 mm/min.

### (3) Adhesive strength

Polyethylene terephthalate (PET) resin was poured into a mold with the use of a LIM molding equipment, and molding was carried out for 5 minutes at a hot plate preset temperature of 150 °C and a mold compression of 80 MPa in a manner such that the PET resin would be in contact with the prepared rubber composition. The 90 °C peeling strength of the molding against the PET resin was evaluated in accordance with JIS K6256-2. Rubber compositions having an adhesion strength of 0.2 N / mm or higher towards the PET resin were determined as "having adhesion" and regarded as the examples of the present invention.

### (4) Mold releasing property

The mold releasing property of the rubber composition was determined as "good" when the rubber composition could be easily released from the mold and "bad" when it could not be easily released from the mold.

The measurement and evaluation results of Examples 1 to 7 are shown in Table 3 and those of Comparative Examples 1 to 8 are shown in Table 4

**[Table 3]**

| values in normal state | Example 1 | Example 2 | Example 3 | Example 4 | Example 5 | Example 6 | Example 7 |
|---|---|---|---|---|---|---|---|
| hardness (Duro-A) | 43 | 46 | 43 | 42 | 43 | 48 | 45 |
| tensile strength (MPa) | 3.35 | 3.42 | 3.13 | 3.51 | 3.30 | 3.61 | 3.54 |
| elongation (%) | 350 | 320 | 320 | 380 | 350 | 340 | 360 |
| adhesion strength (N/mm) | 0.58 | 0.20 | 0.51 | 0.21 | 0.24 | 0.30 | 0.29 |
| mold releasing property | good | good | good | good | good | good | good |

**[Table 4]**

| values in normal state | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| hardness (Duro-A) | 44 | 42 | 44 | 42 | 45 | 44 | 44 | 45 |
| tensile strength (MPa) | 3.37 | 3.20 | 3.67 | 3.72 | 3.45 | 3.60 | 3.90 | 3.60 |
| elongation (%) | 380 | 380 | 360 | 370 | 340 | 340 | 350 | 350 |
| adhesion strength (N/mm) | 0.03 | 0.02 | 0.03 | 0.02 | 0.03 | 0.02 | 0.03 | 0.01 |
| mold releasing property | good | good | good | good | good | good | good | good |

Among the examples and comparative examples mentioned above, Examples 1 to 7, to which methacrylic acid ester compounds of Compound 1 to Compound 6 were blended, excelled in the adhesion strength towards organic resin and also had good mold releasing property. Specifically, Example 1, to which Compound 1 was blended, and Example 3, to which Compound 2 was blended, had more superior adhesion strength towards organic resin. Examples 1 to 6 furthermore excelled in mechanical properties, i.e. hardness, tensile strength and elongation. In contrast, Comparative Examples 1 to 8, to which methacrylic acid ester compounds of Compound 7 to Compound 14 were blended, exhibited considerably poor adhesion strength towards organic resin, although they exhibited good mold releasing property.

### Industrial applicability

The rubber composition of the present invention excels in heat resistance, acid resistance, gas permeation resistance and high-speed moldability and also has low hardness, low reaction force and superior compression set ratio at high temperatures. Furthermore, the rubber composition of the present invention has adhesion towards organic resin, although it does not easily adhere to metals such as a mold. Therefore, gasket materials with self-adhesion towards the cell of a fuel cell made of organic resin, for example, can be obtained from the rubber composition of the present invention, and the rubber composition of the present invention is therefore highly useful in the field of fuel cell gasket materials and other various sealing materials.

## Claims

1. A rubber composition, **characterized by** comprising
[A] an ethylene / α-olefin / non-conjugated polyene copolymer satisfying the following (a) to (e):
(a) said copolymer is a copolymer of ethylene, an α-olefin, and a non-conjugated polyene
(b) carbon number of the α-olefin is from 3 to 20
(c) weight ratio of ethylene units / α-olefin units is from 35 / 65 to 95 / 5
(d) iodine value is within a range of from 0.5 to 50
(e) limiting viscosity [η] measured in a decalin solution at 135 °C is from 0.01 to 5.0 dl/g,
[B-1] an SiH group-containing compound having two SiH groups in one molecule represented by the following general formula [II] and/or [B-2] an SiH group-containing compound having three SiH groups in one molecule represented by the following general formula [III], and
[C] at least one methacrylic acid ester compound selected from the group consisting of compounds represented by the following formulas [IV], [V], [VI], [VII], [VIII] and [IX]. 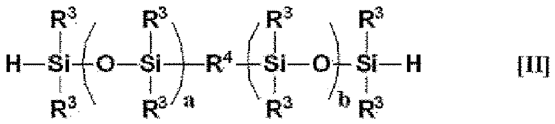 (In formula [II], R³ is a monovalent group having a carbon number of 1 to 10, and is an unsubstituted or substituted saturated hydrocarbon group or aromatic hydrocarbon group, where R³ in one molecule may be of the same or different kind; a is an integer of 0 to 20; b is an integer of 0 to 20; and R⁴ is a divalent organic group having a carbon number of 1 to 30 or an oxygen atom.) 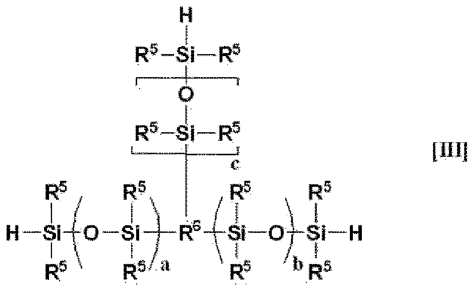 (In formula [III], R⁵ is a monovalent group having a carbon number of 1 to 10, and is an unsubstituted or substituted saturated hydrocarbon group or aromatic hydrocarbon group, where R⁵ in one molecule can be of the same or different kind; each of a, b and c is independently an integer of 0 to 20; and R⁶ is a trivalent organic group having a carbon number of 1 to 30.) 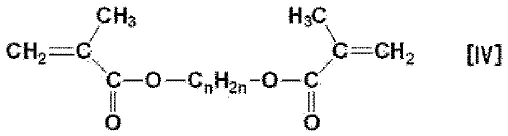 (In formula [IV], n is an integer of from 1 to 10.) 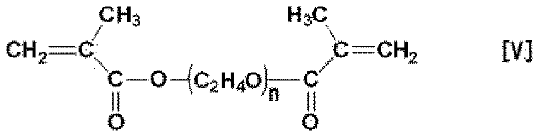 (In formula [V], n is an integer of from 1 to 10.) 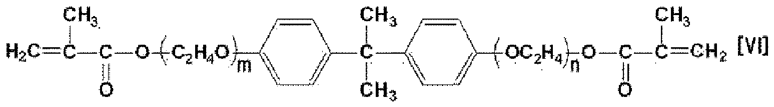 (In formula [VI], each of m and n is an integer of from 1 to 10.) 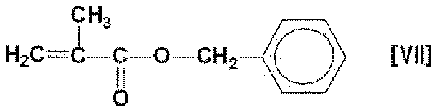 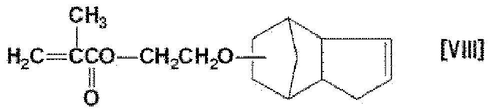 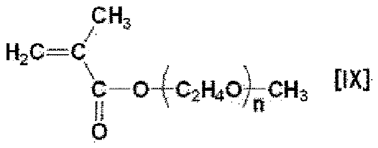 (In formula [IX], n is an integer of from 1 to 10.)

2. The rubber composition according to Claim 1, wherein said non-conjugated polyene is at least one kind of norbornene compound represented by the following general formula [I]. 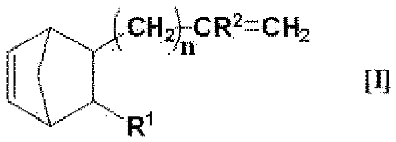 (In formula [I], n is an integer of from 0 to 10, R¹ is a hydrogen atom or an alkyl group having a carbon number of 1 to 10, and R² is a hydrogen atom or an alkyl group having a carbon number of 1 to 5.)

3. The rubber composition according to Claim 1, comprising said methacrylic acid ester compound [C] in an amount of from 0.1 to 10 parts by weight based on 100 parts by weight of the ethylene / α-olefin / non-conjugated polyene copolymer [A].

4. The rubber composition according to Claim 1, comprising from 3.0 to 7.0 parts by weight of said SiH group-containing compound having two SiH groups in one molecule [B-1] and from 0.1 to 2.0 parts by weight of said SiH group-containing compound having three SiH groups in one molecule [B-2] based on 100 parts by weight of said ethylene / α-olefin / non-conjugated polyene copolymer [A].

5. The rubber composition according to Claim 1 or 4, wherein said SiH group-containing compound having two SiH groups in one molecule [B-1] is at least one compound selected from the group consisting of compounds represented by the formulas [II-1], [II-2], [II-3] and [II-4].

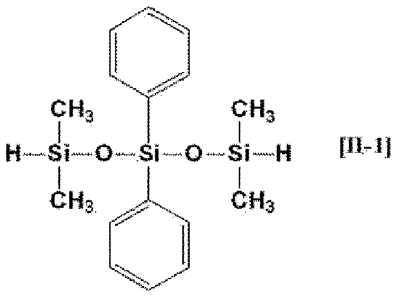

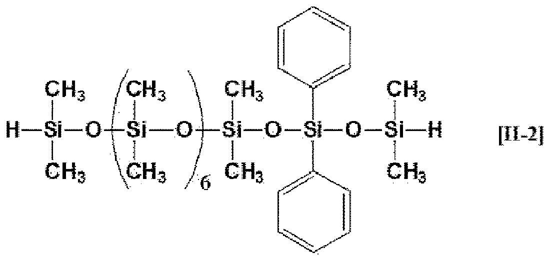

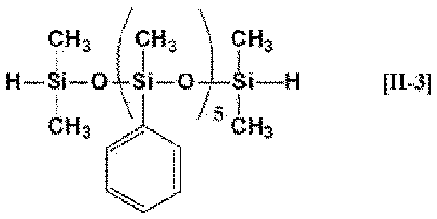

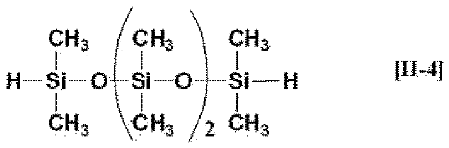

6. The rubber composition according to Claim 1 or 4, wherein said SiH group-containing compound having three SiH groups in one molecule [B-2] is a compound represented by the formula [III-1].

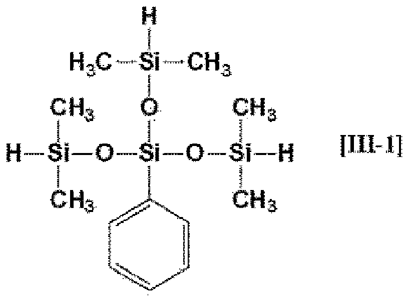

7. A gasket material for fuel cells, **characterized in that** said gasket material consists of the rubber composition according to any one of Claims 1 to 6.

8. A fuel cell, **characterized in that** said fuel cell is equipped with a gasket material for fuel cells consisting of the rubber composition according to any one of Claims 1 to 6.

9. A sealing material, **characterized in that** said sealing material consists of the rubber composition according to any one of Claims 1 to 6.
